# EUROPÄISCHE PATENTSCHRIFT

(11) **EP 2 528 801 B1**
(45) Veröffentlichungstag und Bekanntmachung des Hinweises auf die Patenterteilung: **16.04.2014**
(21) Anmeldenummer: 10702058.8
(22) Anmeldetag: 28.01.2010
(51) Int. Cl.: B62D 7/14, B62D 5/04, B62D 5/00

(54) **VERFAHREN ZUM ÜBERFÜHREN EINES IN EINEM KRAFTFAHRZEUG VORGESEHENEN LENKWINKEL-STELLERS IN EINEN SICHEREN ZUSTAND**
METHOD FOR PUTTING A STEERING ANGLE ADJUSTER PROVIDED IN A MOTOR VEHICLE INTO A SAFE STATE
PROCÉDÉ PERMETTANT D'AMENER UN ACTIONNEUR D'ANGLE DE BRAQUAGE DISPOSÉ DANS UN VÉHICULE AUTOMOBILE DANS UN ÉTAT SÛR

(43) Veröffentlichungstag der Anmeldung: 05.12.2012
(73) Patentinhaber: Bayerische Motoren Werke Aktiengesellschaft, 80809 München (DE)
(72) Erfinder: LÖTZBEYER, Heiko, 80799 München (DE); ROTHMUND, Tobias, 80995 München (DE)
(86) Internationale Anmeldenummer: PCT/EP2010/000507
(87) Internationale Veröffentlichungsnummer: WO 2011/091813

(56) Entgegenhaltungen:
- EP-A1- 0 463 309
- EP-A2- 0 352 759
- DE-A1- 3 841 569
- GB-A- 2 186 244
- US-A1- 2004 003 956

## Beschreibung

Die Erfindung betrifft ein Verfahren zum Überführen eines in einem Kraftfahrzeug vorgesehenen, letztlich mit elektrischen Energie aus dem Fahrzeug-Bordnetz betriebenen, insbesondere elektromotorischen Lenkwinkel-Stellers eines Vorderachs-Überlagerungs-Lenksystems oder eines Hinterachs-Lenksystems in einen sicheren Zustand, indem bei Auftreten eines signifikanten Fehlers eine elektronische Steuereinheit diesen Lenkwinkel-Steller unter Berücksichtigung von Randbedingungen in eine sog. Neutralposition oder Nulllage bewegt.

Im einfachsten Fall wird bei einer Störung in einem System ein systeminterner Aktuator, bei welchem es sich beispielsweise um einen elektrischen Drehmotor oder einen Linearmotor oder um hydraulische oder pneumatische Zylinder handeln kann, bei fehlenden Informationen über die aktuellen Umgebungs-Randbedingungen, hervorgerufen bspw. durch einen Kommunikationsabbruch in einem zugehörigen System-Netzwerk, in seiner aktuellen Position abgeschaltet und damit außer Betrieb gesetzt. Beispielsweise in der DE 38 25 280 A1 oder in der DE 40 20 568 A1 ist für einen Lenkwinkelsteller in einem Hinterachs-Lenksystem eines zweispurigen zweiachsigen Kraftfahrzeugs die Zurückführung des Lenkwinkel-Stellers im Fehlerfall in eine Nulllage beschrieben.

Des Weiteren offenbart Dokument DE 3841569 A1 die Präambel des Anspruchs 1.

Bei einem Fahrdynamik-Regelsystem eines Kraftfahrzeugs mit einem zentralen Regler in Form eines sog. High-Level-Steuergeräts, das bzw. der verschiedene die Fahrdynamik des Fahrzeugs beeinflussende Aktuatoren diesen übergeordnet ansteuert, erfahren idealerweise die sog. Low-Level-Steuergeräte der einzelnen Aktuatoren, welche deren Bewegung letztlich ansteuern, nur über das Kommunikations-Netzwerk des Systems von den für diese Ansteuerung relevanten Randbedingungen. Da für ein bei Auftreten eines Fehlers durchzuführendes Überführen eines Fahrzeug-Lenkwinkel-Stellers in einen sicheren Zustand, welches auch als Zurückführung oder Rückstell-Bewegung des Lenkwinkel-Stellers in einem Fehlerfall bezeichnet werden kann, ebenfalls mehrere Randbedingungen oder Umgebungsgrößen benötigt werden, so bspw. die Signale eines Raddrehzahlimpulsgebers und/oder eines Tachoimpulsgeber, eines Lenkwinkelgebers sowie eine Information über das Leistungsvermögen des elektrischen Bordnetzes des Fahrzeugs und mehr, müssten entsprechende Signalgeber und die zugehörigen Kommunikations-Leitungen redundant vorhanden sein, da andernfalls bei einer Störung im Kommunikations-Netzwerk ein Low-Level-Steuergerät den zugehörigen Aktuator, bspw. einen Lenkwinkel-Steller, nicht geeignet in eine Neutralposition oder Nulllage zurückfahren kann. Dies stellt jedoch einen unvertretbar hohen Aufwand dar, weshalb allgemein ein Aktuator bzw. im speziellen ein Lenkwinkel-Steller eines Kraftfahrzeugs (gemäß den sächlichen Merkmalen des Oberbegriffs des Anspruchs 1) bei einer Abschaltung im Fehlerfall in seiner momentanen Position verharrt und nicht in eine systemspezifische sichere Lage gebracht werden kann. Damit ist unerwünschterweise kein definiertes Verhalten des Systems im Abschaltfall darstellbar.

Eine Abhilfemaßnahme für diese geschilderte Problematik aufzuzeigen, ist Aufgabe der vorliegenden Erfindung.

Die Lösung dieser Aufgabe ist für ein Verfahren nach dem Oberbegriff des Anspruchs 1 dadurch gekennzeichnet, dass entweder anhand des Betriebszustands des Fahrzeugs oder letztlich anhand einer elektrischen Energiebilanz festgestellt wird, ob aufgrund einer Fortbewegung des Fahrzeugs eine energiebedarfs-verträgliche Bewegung des Lenkwinkel-Stellers möglich ist und dass nur bejahendenfalls eine Steller-Bewegung durchgeführt wird, welche dann derart langsam erfolgt, dass der Fahrer hierauf praktisch intuitiv reagieren kann. Dabei kann für die elektrische Energiebilanz das vom Lenkwinkel-Steller aufzubringende Drehmoment oder die (bzw. dessen) erforderliche Kraft bestimmt oder der Energieverbrauch ermittelt werden oder es kann die Steller-Bewegung mit einem in einer elektronischen Steuereinheit abgelegten Modell verglichen oder der zeitliche Verlauf der elektrischen Versorgungsspannung insbesondere am Spannungseingang der elektronischen Steuereinheit ausgewertet werden.

Es wurde erkannt, dass, solange der Lenkwinkel-Steller selbst fehlerfrei arbeitet und lediglich die für dessen normale Funktion nötigen Randbedingungen bzw. Umgebungsgrößen nicht mehr erfasst werden können, dieser Steller zumindest soweit weiterhin betrieben werden kann, dass dieser angesteuert durch eine elektronische Steuereinheit, vorzugsweise durch das stellereigene sog. Low-Level-Steuergerät, ohne die Gefahr, hierbei einen sicherheitskritischen Zustand zu erzeugen, in einen für das Fahrverhalten des Fahrzeugs sicheren Zustand bzw. in einen den Fahrer des Fahrzeugs nicht verunsichernden oder irritierenden Zustand bewegt (= "überführt") werden kann. In diesem Sinne erfolgt das sog. Zurückstellen, d.h. das Bewegen oder "Überführen" des Lenkwinkel-Stellers in seine Neutralposition mit einer solch langsamen Geschwindigkeit, dass hierbei keine bedrohliche Fahrsituation auftreten kann, weil der Fahrer des Kraftfahrzeugs die durch die Steller-Bewegung hervorgerufene Veränderung direkt praktisch nicht feststellt, sondern diese Veränderung intuitiv mit einer geringfügigen Drehbewegung an seinem Lenkrad ausgleichen kann.

Vorteilhafterweise wird bei hinreichend kleiner Bewegungs-Geschwindigkeit des Lenkwinkel-Stellers kein eigenständiger und den absoluten Lenkwinkel des Lenkwinkel-Stellers oder der lenkbaren Fahrzeug-Räder erfassender Lenkwinkelsensor benötigt; vielmehr ist der für die Lageregelung eines elektromotorischen Lenkwinkel-Stellers notwendige und in dessen Elektromotor vorgesehene Drehwinkel-Sensor des Lenkwinkel-Stellers ausreichend. Durch zyklisches Abspeichern des mit diesem Drehwinkel-Sensor ermittelten aktuellen Absolut-Lenkwinkels kann nämlich dieser Wert auch nach einem spontanen Ausfall der elektrischen Versorgungsspannung an der elektronischen Steuereinheit oder an der Sensorik wieder rekonstruiert werden, wobei grundsätzlich bei einer höheren Abspeicher-Frequenz eine höhere Rückstellgeschwindigkeit des Lenkwinkel-Stellers gewählt werden kann. Alternativ kann selbstverständlich auch ein eigenständiger den Absolut-Lenkwinkel oder die Absolutwinkel des Lenkwinkel-Stellers messender Sensor eingesetzt werden.

Ein weiteres erfindungsgemäßes Kriterium stellt neben der langsamen Rückstell-Bewegung des Lenkwinkel-Stellers in seine Neutralposition eine direkte oder indirekte Abfrage der Möglichkeit einer energiebedarfs-verträglichen Bewegung des letztlich mit elektrischer Energie aus dem Fahrzeug-Bordnetz betriebenen Lenkwinkel-Stellers dar. Um sowohl den Lenkwinkel-Steller als auch das elektrische Bordnetz des Kraftfahrzeugs nicht zu überlasten, soll eine Rückstell-Bewegung des Lenkwinkel-Stellers nur dann erfolgen, wenn sich das Kraftfahrzeug zumindest geringfügig vorzugsweise mit eigener Kraft und somit mit in Betrieb befindlichem Fahrzeug-Antriebsaggregat, welches üblicherweise über einen angehängten Generator das elektrische Bordnetz des Kraftfahrzeugs mit elektrischer Energie versorgt, fortbewegt. Praktisch nur unter diesen Randbedingungen kann unter vertretbarem Energieeinsatz ein Lenkwinkel-Steller bewegt werden und es können praktisch nur dann die diesem zugeordneten Fahrzeug-Räder geringfügig gelenkt werden. Herrscht oder herrschen diese genannte(n) Randbedingung(en) nicht, so soll eine Rückstell-Bewegung des Lenkwinkel-Stellers entweder nicht aufgenommen oder gegebenenfalls abgebrochen bzw. unterbrochen werden.

Die Tatsache, ob das Kraftfahrzeug geringfügig bewegt wird, kann grundsätzlich anhand der Signale eines Fahrgeschwindigkeits-Sensors oder eines Raddrehzahl-Sensors (von zumindest einem der Fahrzeug-Räder) festgestellt werden; ist dies jedoch zu aufwändig, so kann alternativ eine sog. Überwachungsfunktion zur Schätzung des Fahrzustands durchgeführt werden. In diesem Sinne kann das vom Lenkwinkel-Steller bei dessen Rückstell-Bewegung benötigte Drehmoment erfasst und/oder die vom Lenkwinkel-Steller aufzubringende Kraft während der Rückstell-Bewegung beobachtet werden. Überschreitet einer dieser Werte einen vorgegebenen Grenzwert, so deutet dies darauf hin, dass sich das Fahrzeug nicht mit einer ausreichenden, eine energiebedarfs-verträgliche Steller-Bewegung erlaubenden Geschwindigkeit fortbewegt. Alternativ kann der Verlauf oder die Charakteristik der festgestellten Steller-Bewegung mit einem in einer elektronischen Steuereinheit, vorzugsweise im Low-Level-Steuergerät des Lenkwinkel-Stellers abgelegten und gerechnetem Modell des Lenkwinkel-Stellers verglichen werden, wobei im Falle einer signifikanten Abweichung beispielsweise des Winkel-Zeitverlaufes bei gegebenem Energieeinsatz auf eine nicht ausreichende Fortbewegungs-Geschwindigkeit des Kraftfahrzeugs geschlossen wird. Schließlich kann auch eine Beobachtung des Energieverbrauchs des Lenkwinkel-Stellers im Verlauf von dessen Rückstell-Bewegung erfolgen, wobei auch dann, wenn überhöhte Energie-Verbrauchswerte festgestellt werden, diese Tatsache als ein Fahrzeug-Betriebszustand erkannt wird, in welchem entweder das Fahrzeugs-Antriebsaggregat nicht in Betrieb ist oder die Fahrgeschwindigkeit des Fahrzeugs zu gering ist, so dass dann die Rückstell-Bewegung des Lenkwinkel-Stellers abgebrochen bzw. unterbrochen wird.

Grundsätzlich kann - alternativ oder zusätzlich zu den im vorhergehenden Absatz genannten Möglichkeiten auch eine Überwachungsfunktion zur Schätzung des Energiezustands im elektrischen Bordnetz des Kraftfahrzeugs durchgeführt werden. Hierzu wird vorzugsweise die elektrische Versorgungsspannung am Eingang des Low-Level-Steuergeräts des Lenkwinkel-Stellers laufend überwacht. Eine ausreichend präzise Schätzung des Energiezustands ist dadurch möglich, dass die elektrische Spannung sowohl im belasteten Zustand, also während eine Rückstell-Bewegung des Lenkwinkel-Stellers erfolgt, als auch im unbelastetem Zustand, also während eine Rückstell-Bewegung des Lenkwinkel-Stellers unterbrochen ist, gemessen wird. Zur Erkennung des Energiezustandes "ein im Fzg.-Bordnetz vorgesehener Akkumulator wird bspw. durch einen vom Fzg.-Antriebsaggregat angetriebenen Generator geladen" muss im unbelastetem Zustand eine höhere elektrische Spannung als die Nennspannung des besagten Akkumulators gemessen werden oder im belastetem Zustand keine nennenswerte Unterschreitung dieses Spannungslimits festgestellt werden. Sobald im belasteten Zustand, d.h. bei einer Rückstellbewegung des Lenkwinkel-Stellers die elektrische Spannung des Akkumulators nicht mehr in ausreichender Höhe erkannt werden kann, muss sofort in einen unbelasteten Zustand gewechselt, d.h. die Rückstell-Bewegung des Lenkwinkel-Stellers unterbrochen werden.

Jede der genannten Überwachungen bzw. Kombinationen hieraus können sofort oder wenn diese für eine definierte Zeit herrschen, zu einer Unterbrechung einer Steller-Rückstell-Bewegung, d.h. eines Überführens des Lenkwinkel-Stellers in einen sicheren Zustand, oder zu einer endgültigen Abschaltung des Systems führen. Mit einem erfindungsgemäßen Verfahren wird ein besseres Systemverhalten im Fehlerfall erzielt, wobei das Kraftfahrzeug auch im Fehlerfall vom Nutzer beherrschbar bleibt und insbesondere mit geringen Einschränkungen weiterhin genutzt werden kann. Vorteilhafterweise wird zur Durchführung dieses Verfahrens keine zusätzliche Hardware benötigt; vielmehr wird die bislang benötigte Sensorik durch die beschriebenen Schätzverfahren ersetzt. Die innerhalb der elektronischen Steuereinheit benötigte zusätzliche Rechenzeit ist äußerst gering und kann dadurch kompensiert werden, dass in einem entsprechenden Notlaufprogramm bestimmte Überwachungen des Normalprogramms abgeschaltet werden, wie bspw. Botschafts-Plausibilisierungen, wobei noch darauf hingewiesen sei, dass dies sowie eine Vielzahl weiterer Details durchaus abweichend von obigen Erläuterungen gestaltet sein kann, ohne den Inhalt der Patentansprüche zu verlassen.

## Patentansprüche

1. Verfahren zum Überführen eines in einem Kraftfahrzeug vorgesehenen, letztlich mit elektrischer Energie aus dem Fahrzeug-Bordnetz betriebenen elektromotorischen Lenkwinkel-Stellers eines Vorderachs-Überlagerungs-Lenksystems oder eines Hinterachs-Lenksystems in einen sicheren Zustand, indem bei Auftreten eines signifikanten Fehlers eine elektronische Steuereinheit diesen Lenkwinkel-Steller unter Berücksichtigung von Randbedingungen in eine sog. Neutralposition oder Nulllage bewegt,
**dadurch gekennzeichnet, dass** entweder anhand des Betriebszustands des Fahrzeugs oder letztlich anhand einer elektrischen Energiebilanz festgestellt wird, ob aufgrund einer Fortbewegung des Fahrzeugs eine energiebedarfs-verträgliche Bewegung des Lenkwinkel-Stellers möglich ist und dass nur bejahendenfalls eine Steller-Bewegung durchgeführt wird, welche dann derart langsam erfolgt, dass der Fahrer hierauf praktisch intuitiv reagieren kann.

2. Verfahren nach Anspruch 1,
**dadurch gekennzeichnet, dass** für die elektrische Energiebilanz das vom Lenkwinkel-Steller aufzubringende Drehmoment oder die erforderliche Kraft bestimmt oder der Energieverbrauch ermittelt oder die Steller-Bewegung mit einem in einer elektronischen Steuereinheit abgelegten Modell verglichen oder der zeitliche Verlauf der elektrischen Versorgungsspannung insbesondere am Spannungseingang der elektronischen Steuereinheit ausgewertet wird.

## Claims

1. A method for transferring an electric motor steering angle adjuster of a front axle superimposed steering system or a rear axle steering system, which is provided in a motor vehicle and ultimately driven by electric energy from the vehicle electrical system, into a safe state, in that upon the occurrence of a significant fault, an electronic control unit moves this steering angle adjuster into a so-called neutral position or zero position taking into account boundary conditions, **characterised in that** it is established either based on the operating state of the vehicle or ultimately based on an electrical energy balance whether, on the basis of a movement of the vehicle, an energy requirement-compatible movement of the steering angle adjuster is possible and **in that** an adjuster movement is only carried out in the affirmative case, said movement then taking place slowly in such a way that the driver can practically react intuitively to this.

2. A method according to claim 1, **characterised in that** for the electrical energy balance, the torque to be applied by the steering angle adjuster or the required force is determined or the energy consumption is ascertained or the adjuster movement is compared with a model stored in an electronic control unit or the time course of the electrical supply voltage, more especially at the voltage input of the electronic control unit, is evaluated.

## Revendications

1. Procédé permettant de transférer dans un état sûr un organe de réglage d'angle de braquage électromoteur d'un système de braquage à superposition d'un essieu avant ou d'un système de braquage d'un essieu arrière, monté dans un véhicule et actionné en fin de compte par de l'énergie électrique provenant du réseau de bord de ce véhicule, selon lequel en présence d'un défaut significatif, une unité de commande électronique déplace cet organe de réglage d'angle de braquage dans une position neutre ou nulle en tenant compte de conditions limites,
**caractérisé en ce que**
soit à partir de l'état de fonctionnement du véhicule ou en fin de compte en fonction d'un bilan d'énergie électrique, on détermine si, à partir d'une poursuite du déplacement du véhicule, un déplacement compatible avec la demande en énergie de l'organe de réglage d'angle de braquage est possible, et, uniquement dans l'affirmative on met en oeuvre un déplacement de réglage qui est effectué lentement de sorte que le conducteur puisse pratiquement réagir par intuition.

2. Procédé conforme à la revendication 1,
**caractérisé en ce que**
pour effectuer le bilan d'énergie électrique on détermine le couple de rotation devant être transmis à l'organe de réglage d'angle de braquage ou la force nécessaire, ou on détecte la consommation d'énergie, ou on compare le déplacement de l'organe de réglage avec un modèle enregistré dans une unité de commande électronique, ou on exploite les variations chronologiques de la tension d'alimentation électrique en particulier au niveau de l'entrée en tension de l'unité de commande électronique.
